Europäisches Patentamt

European Patent Office

Office européen des brevets

(11) Numéro de publication: **0 254 636 B1**

(12) **FASCICULE DE BREVET EUROPEEN**

(45) Date de publication du fascicule du brevet:
06.12.89

(51) Int. Cl.⁴: **B60S 1/08**

(21) Numéro de dépôt: 87401687.6

(22) Date de dépôt: 20.07.87

(54) Dispositif de chauffage pour sonde hydrométrique de commande automatique d'équipments de véhicules, notamment d'essuie-glaces.

(30) Priorité: 24.07.86 FR 8610768

(43) Date de publication de la demande:
27.01.88 Bulletin 88/4

(45) Mention de la délivrance du brevet:
06.12.89 Bulletin 89/49

(84) Etats contractants désignés:
DE ES FR GB IT NL SE

(56) Documents cités:
DE-A- 2 022 823
FR-A- 2 221 045
GB-A- 1 101 441
GB-A- 1 387 436

PATENT ABSTRACTS OF JAPAN,
vol. 9, no. 217 (P-385)[1940], 4 septembre 1985; &
JP-A-60 76 684 (STANLEY DENKI K.K.) 01-05-1985

(73) Titulaire: SOCIETE MANZONI BOUCHOT, Zone
Industrielle "Le Plan d'Acier" Boîte Postale No 9,
F-39200 Saint-Claude(FR)

(72) Inventeur: Manzoni, Bernard, Avignon,
F-39220 Saint-Claude(FR)

(74) Mandataire: Descourtieux, Philippe et al, CABINET
BEAU de LOMENIE 55 rue d'Amsterdam,
F-75008 Paris(FR)

ACTORUM AG

## Description

On connaît déjà, notamment par le certificat d'utilité FR-A-2.498.137 et par le brevet FR-A-2.555.752, des commandes automatiques d'équipements de véhicules, par exemple des essuie-glaces. De telles commandes, mises en action par les intempéries rencontrées par les véhicules, doivent permettre le fonctionnement des essuie-glaces, l'allumage des feux de croisement ou des feux de brouillard ou, plus généralement, la mise en route des équipements destinés à faciliter la conduite par mauvais temps.

On sait que les commandes automatiques de ce genre sont pilotées par une sonde hygrométrique constituée essentiellement par une résistance électrique variable en fonction du degré d'humidité dû aux intempéries rencontrées par le véhicule, par exemple le brouillard ou la pluie.

Cette sonde hygrométrique, généralement constituée par un circuit imprimé sur un support en matière plastique, est montée à l'avant du véhicule dans une région soumise directement à l'humidité ambiante, mais toutes dispositions sont prises pour éviter qu'elle ne soit atteinte par un ruissellement s'écoulant sur la carrosserie du véhicule.

On sait, d'autre part que, pour obtenir un fonctionnement convenable de la commande automatique, il est nécessaire d'assurer un chauffage permanent du support de la sonde hygrométrique. A cet effet, au moins une résistance électrique de chauffage est noyée dans le support de la sonde.

Dans le cas des deux réalisations connues et mentionnées plus haut, cette résistance de chauffage est, en général, mise en service au moyen d'une tension électrique qui varie en fonction du degré d'humidité détecté par la sonde. On évite ainsi des échauffements prohibitifs du support de la sonde, qui risqueraient de le détériorer.

Toutefois, le dispositif de chauffage qui vient d'être rappelé présente un inconvénient. En effet, si un véhicule a séjourné à l'arrêt dans un lieu humide, éventuellement un garage, la sonde commande le fonctionnement des équipements lorsque le conducteur veut mettre en route son véhicule, alors même qu'il n'existe aucune humidité susceptible de se déposer sur le parebrise et risquant de gêner la conduite. Le fonctionnement des divers équipements, notamment des essuie-glaces, se poursuit, quelquefois pendant plusieurs minutes, jusqu'à ce que le support de la sonde soit suffisamment chauffé et que toute humidité sur la résistance détectrice ait disparu.

Cet inconvénient est dû au fait que la puissance de chauffage est d'autant plus faible que le taux d'humidité détecté est lui-même faible, comme c'est le cas dans un garage.

Certes, le certificat d'utilité FR-A-2.498.137 a proposé d'utiliser des moyens de chauffage indépendants du degré d'humidité et sans aucun contrôle de température. Une telle solution n'est pas satisfaisante, car la résistance de chauffage doit encore être telle qu'on ne risque aucune détérioration du support de la sonde, c'est-à-dire que le chauffage sera peu intense. L'inconvénient mis en évidence plus haut, lors du démarrage d'un véhicule dans un lieu abrité mais humide, conduit encore à un fonctionnement inutile et relativement long des équipements, et notamment des essuie-glaces.

La présente invention vise à éliminer l'inconvénient, qui vient d'être exposé, des dispositifs connus de chauffage pour sonde hygrométrique de commande automatique de certains équipements d'un véhicule.

Selon l'invention, la résistance de chauffage de la sonde est connectée aux bornes d'une source de tension constante lors de la mise en marche du moteur du véhicule, mais il est prévu, entre l'une des bornes de cette source de tension et la borne correspondante de la sonde, un détecteur de température à seuil. Celui-ci, par exemple du type thermistance ou analogue, est disposé dans le support de la sonde et au voisinage de sa résistance détectrice d'humidité, et il assure la coupure du circuit d'alimentation de la résistance de chauffage lorsque la température de la sonde atteint une valeur prédéterminée.

Grâce à ces dispositions, il est possible de donner à la résistance de chauffage de la sonde une valeur suffisamment faible pour que la puissance de chauffage soit très importante. Lors du démarrage d'un véhicule ayant séjourné dans un lieu abrité mais humide, la sonde est très rapidement chauffée et l'humidité qui s'y était éventuellement condensée est éliminée sans délai. Le fonctionnement inutile des équipements, notamment des essuie-glaces, provoqué par la mise en marche du moteur du véhicule, s'arrête avant que le conducteur n'ait eu le temps d'éprouver une gêne sensible.

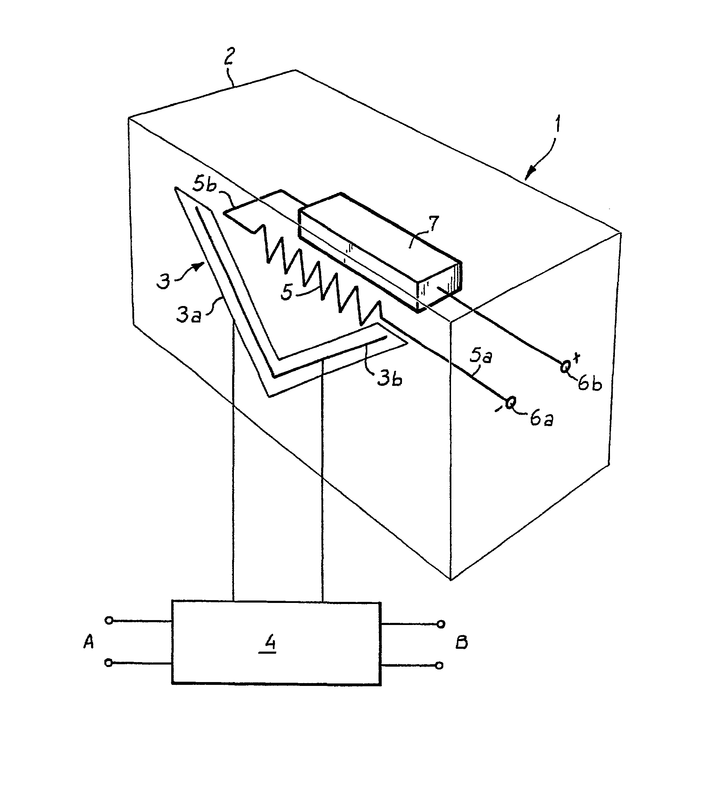

L'invention sera mieux comprise au cours de la description qui va suivre d'un mode de réalisation, donné uniquement à titre d'exemple en référence au dessin annexé dans lequel la figure unique représente une sonde hygrométrique pour commande d'équipements de véhicule, tels que des essuie-glaces, munie d'un dispositif de chauffage selon l'invention.

Si l'on se reporte au dessin, on voit une sonde désignée par la référence générale 1. Elle comporte un support 2, généralement constitué par un bloc de matière plastique. Sur l'une des faces de ce dernier est imprimée une résistance électrique 3 de détection d'humidité, par exemple du type décrit dans le brevet-FR-A-2.555.752. Les deux électrodes 3a et 3b de la résistance détectrice sont connectées à un circuit électronique de commande des équipements d'un véhicule pour l'assistance à la conduite par mauvais temps, ce circuit étant désigné par la référence générale 4 et comportant deux bornes d'entrée A reliées à une source d'alimentation et deux bornes de sortie B connectées au moteur d'entraînement des essuie-glaces ou à un relais d'allumage des phares, ou encore à tout autre équipement approprié.

Dans le support 2 de la sonde est noyée une résistance de chauffage 5 dont les bornes 5a et 5b sont reliées à une source de tension constante représentée schématiquement par ses bornes 6a et 6b supposées placées sur une face du support 2.

La résistance de chauffage 5 est située de préférence au voisinage de la résistance détectrice 3 et un détecteur de tempé rature à seuil 7 est connecté entre sa borne 5b et la borne 6b correspondante de la source de tension. Ce détecteur est lui aussi placé au voisinage de la résistance détectrice 3.

Lorsque le véhicule se déplace dans une zone d'intempéries, la sonde pilote le circuit de commande 4 dans des conditions connues, notamment par les brevets précités.

De toute façon et quelle que soit l'humidité qui recouvre la résistance détectrice 3, notamment après un séjour du véhicule à l'arrêt dans un lieu humide, la température moyenne de la sonde (support et résistance détectrice) ne pourra s'élever au-delà d'une valeur déterminée par les caractéristiques du détecteur de température à seuil 7. Celui-ci assure en effet la coupure du circuit d'alimentation de la résistance de chauffage 5 dès que sa propre température atteint une valeur déterminée, éventuellement différente de la température moyenne du support 2.

## Revendications

Dispositif de chauffage pour sonde hygrométrique insérée dans un circuit de commande automatique d'équipements de véhicules pour l'assistance à la conduite par mauvais temps, tels notamment que les essuie-glaces et les feux, comportant au moins une résistance électrique de chauffage (5) située dans le support (2) de la sonde (3) et au voisinage de celle-ci, cette résistance étant connectée aux bornes (6a-6b) d'une source de tension constante lors de la mise en marche du moteur du véhicule, caractérisé en ce qu'un détecteur de température à seuil (7), par exemple du type thermistance ou analogue, est disposé dans le support (2) de la sonde au voisinage de sa résistance (3) détectrice d'humidité, et est connecté entre l'une des bornes (6b) de la source de tension et la borne correspondante (5b) de la résistance de chauffage 5), ledit détecteur assurant la coupure du circuit d'alimentation de la résistance de chauffage (5) lorsque la température de la sonde atteint une valeur prédéterminée.

## Claims

Heating device for hygrometric sensor inserted in a circuit for automatically controlling vehicle equipments for aiding driving in bad wheather, such as in particular the windscreen wipers and lights, comprising at least one electrical heating resistor (5) located in the support (2), of the sensor (3) and in the vicinity thereof, this resistor being connected to the terminals (6a–6b) of a constant voltage source when the engine of the vehicle is switched on, characterized in that a threshold temperature detector (7), for example of the bimetal type or the like, is disposed in the support (2) of the sensor in the vicinity of its humidity detector resistor (3), and is connected between one of the terminal (6b) of the source of voltage and the corresponding terminal (5b) of the heating resistor (5), said detector ensuring cut-off of the supply circuit of the heating resistor (5) when the temperature of the sensor attains a predetermined value.

## Patentansprüche

Beheizungseinrichtung für einen hygrometrischen Aufnehmer, der in einer Schaltung zur automatischen Steuerung von der Unterstützung der Führung eines Fahrzeugs bei schlechtem Wetter dienenden Fahrzeugvorrichtungen, insbesondere von Scheibenwischern und Scheinwerfern, eingebaut ist, mit wenigstens einem im Träger (2) des Aufnehmers (3) und in der Nähe desselben angeordneten elektrischen Heizwiderstand (5), der beim Anlassen des Fahrzeugmotors mit Anschlußklemmen (6a bis 6b) einer Konstantspannungsquelle verbunden ist, dadurch gekennzeichnet, daß ein Temperaturschwellendetektor (7), beispielsweise ein Thermistor- oder ein Analogtyp, im Träger (2) des Aufnehmers in der Nähe von dessen Widerstand (3) zur Erfassung der Feuchtigkeit angeordnet ist und zwischen eine der Anschlußklemmen (6b) der Spannungsquelle und der entsprechenden Anschlußklemme (5b) des Heizwiderstandes (5) geschaltet ist, wobei der Detektor das Abschalten der Vorsorgungsschaltung für den Heizwiderstand (5) gewährleistet, wenn die Temperatur des Aufnehmers einen vorbestimmten Wert erreicht.